# EUROPÄISCHE PATENTANMELDUNG

(11) **EP 1 722 557 A1**
(43) Veröffentlichungstag der Anmeldung: **15.11.2006**
(21) Anmeldenummer: 06006049.8
(22) Anmeldetag: 23.03.2006
(51) Int. Cl.: H04N 5/445

(54) **Anordnung mit einem ersten und zweiten elektronischen Gerät, einer Anzeige und einer Fernbedienung zur Steuerung beider elektronischen Geräte**

(30) Priorität: 12.05.2005 DE 102005022141
(71) Anmelder: Fujitsu Siemens Computers GmbH, 80807 München (DE)
(72) Erfinder: Koller, Stefan, 86150 Augsburg (DE); Atzkern, Jürgen, 86505 Münsterhausen (DE)
(74) Vertreter: Epping - Hermann - Fischer

(57) **Zusammenfassung**

Die Erfindung betrifft eine Anordnung aus einem elektronischen Gerät (1) und einem zweiten elektronischen Gerät (5), wobei das erste elektronische Gerät (1) mit einem Anzeigegerät (3) verbunden ist und sowohl Funktionen des ersten elektronischen Gerätes als auch Funktionen des zweiten elektronischen Gerätes (5) über eine Fernbedienung (2) bedient werden können. Um zu erkennen, welche Funktionen des zweiten elektronischen Gerätes (5) über die Fernbedienung (2) bedient werden können, sind die Tastensymbole der entsprechenden Tasten im Anzeigegerät eingeblendet. Erfindungsgemäß sind diejenigen Tasten, die im aktuellen Zustand des zweiten elektronischen Gerätes (5) zur Verfügung stehen, von denjenigen Tasten, die nicht zur Verfügung stehen, grafisch abgehoben.

## Beschreibung

Anordnung mit einem ersten und zweiten elektronischen Gerät, einer Anzeige und einer Fernbedienung zur Steuerung beider elektronischen Geräte

Die Erfindung betrifft eine Anordnung mit einem ersten elektronischen Gerät, einer Fernbedienung zur Bedienung von Funktionen des ersten elektronischen Gerätes, wobei die Funktionen auf der Fernbedienung mit Symbolen gekennzeichnet sind, einem Anzeigegerät und einem zweiten elektronischen Gerät, welche jeweils mit dem ersten elektronischen Gerät verbindbar sind, wobei mit der Fernbedienung für das erste elektronische Gerät auch Funktionen des zweiten elektronischen Gerätes steuerbar sind, wenn das zweite elektronische Gerät an dem ersten elektronischen Gerät angeschlossen ist, und auf dem Anzeigegerät die Symbole der Fernbedienung eingeblendet sind, die für das zweite elektronische Gerät verwendet werden können.

Eine derartige Anordnung ist z.B. durch den Harddiskrecorder von Pioneer, DVR-5100 H DVD mit angeschlossener digitaler Videokamera und einem angeschlossenen Fernseher bekannt.

Ist der Harddiskrecorder Pioneer DVR-5100 H im DV-Aufnahme-Menü so wird z.B. im DV-Aufnahme-Stop-Modus oder im DV-Aufnahme-Pause-Modus ein Menü eingeblendet, das anzeigt, mit welchen Tasten die angeschlossene Videokamera bedient werden kann. Der aktuelle Zustand der DV-Kamera wird dabei extra in einer Zeile mit einem Symbol und Text angezeigt.

Der Nachteil ist, dass der Benutzer hier wissen muss, welche Funktionen, abhängig vom Zustand seiner DV-Kamera, gerade möglich sind.

Wird z.B. angezeigt, dass die Kamera im Stop-Modus ist, so muss der Anwender wissen, dass die angezeigte Taste "Stop" jetzt ohne Funktion ist.

Im DV-Aufnahme-Record-Modus wird die gesamte Tasten-Anzeige ausgeblendet. Der Harddiskrecorder sperrt in diesem Zustand einfach sämtliche Funktionen auf der Videokamera. Aus diesem Grund ist auch keine Bedien-Funktion der Videokamera verfügbar.

Der Benutzer muss sich somit entweder merken, in welchem Zustand sich sein angeschlossenes zweites elektronisches Gerät befindet, um zu wissen, welche Funktionen des zweiten elektronischen Gerätes in diesem Zustand prinzipiell ausführbar sind und welche über die Fernbedienung steuerbar sind.

Da die Menüführung und die Möglichkeiten der elektronischen Geräte immer umfangreicher werden und insbesondere bei angeschlossenen digitalen elektronischen Geräten auch akustisch nicht mehr wahrgenommen werden kann, in welchem Zustand sich das angeschlossene elektronische Gerät befindet, wird es für einen Benutzer immer schwieriger, zu erkennen, welche Symbole auf der Fernbedienung überhaupt für das angeschlossene elektronische Gerät im aktuellen Zustand verwendet werden können.

Der Erfindung liegt daher die Aufgabe zu Grunde, für dieses Problem eine Lösung aufzuzeigen.

Die Aufgabe wird erfindungsgemäß dadurch gelöst, dass diejenigen Symbole der Funktionen, die im aktuellen Zustand des zweiten elektronischen Gerätes verfügbar sind, von den Symbolen der Funktionen, die im aktuellen Zustand nicht verfügbar sind, grafisch unterschiedlich dargestellt sind.

Dies hat den großen Vorteil, dass nun der Benutzer auf einen Blick erkennen kann, welche Funktions-Symbole der Fernbedienung prinzipiell für das zweite elektronische Gerät verwendet werden können, und welche Funktions-Symbole im momentanen Zustand des elektronischen Gerätes aktiv sind, d.h. dass diese Funktionen über die Fernbedienung in dem zweiten angeschlossenen elektronischen Gerät gesteuert werden können.

Vorteilhafterweise sind immer alle Symbole der Funktionen des zweiten elektronischen Gerätes, die prinzipiell durch die Fernbedienung steuerbar sind, eingeblendet.

In der Regel weist die Fernbedieunung druckempfindliche Tasten auf und die Symbole sind den Tasten direkt oder über Doppelfunktionen zugeordnet.

Diese Lösung erleichtert die Bedienung extern angeschlossener elektronischer Geräte enorm. Insbesondere kommt der Effekt hinzu, dass bei einer Bedienung über die Fernbedienung oft Totzeiten in der Reaktion auftreten und man nicht sofort erkennt, ob die Fernbedienung die Funktion ausgeführt hat oder nicht. Infolgedessen drücken viele Benutzer oft die Tasten mehrfach hintereinander oder versuchen das Gerät über andere Tastenkombinationen in einen anderen Zustand zu versetzen, sodass endlich die gewünschte Funktion doch ausführbar ist. Dies führt oft zu einem absolut unkontrollierbaren Verhalten des extern angeschlossenen elektronischen Gerätes und letztendlich zu großem Unmut beim Benutzer. Durch die grafische Markierung derjenigen Symbole bzw. Tasten, die im aktuellen Zustand des elektronischen Gerätes verwendet werden können, ist es für den Benutzer optisch eindeutig ersichtlich, welches Symbol bzw. welche Taste aktiv ist und über die Fernbedienung bedient werden kann.

Gemäß einer bevorzugten Ausführungsform sind die Tasten bzw. Tastensymbole, welche im aktuellen Zustand des zweiten elektronischen Gerätes zur Verfügung stehen, hell dargestellt und diejenigen, die im aktuellen Zustand nicht zur Verfügung stehen, dunkel bzw. schattiert dargestellt.

Vorteilhafterweise wird ein Informationsfeld für den Status des zweiten elektronischen Gerätes ebenfalls auf dem Anzeigegerät eingeblendet, um den Benutzer auch die Logik zu vermitteln, warum im aktuellen Status nur gewisse Funktionen zur Verfügung stehen.
Vorzugsweise ist das erste elektronische Gerät in Form eines Harddiskrecorders ausgebildet und das zweite elektronische Gerät als Kamera. Das Anzeigegerät ist vorzugsweise ein Bildschirm, wie z.B. ein LCD, TFT oder Plasma-Bildschirmgerät und die Anzeige der Tastensymbole erfolgt vorzugsweise in einem sogenannten GUI (Graphical User Interface).

Nachfolgend wird die Erfindung anhand eines in den Zeichnungen dargestellten Ausführungsbeispieles näher erläutert.

In den Zeichnungen zeigen:
- Figur 1: eine schematische Darstellung der Gesamtanordnung,
- Figur 2: eine Fernbedienung und die
- Figuren 3A bis 3C: jeweils die eingeblendeten Tastensymbole der Fernbedienung, die für das zweite elektronische Gerät verwendet werden können.

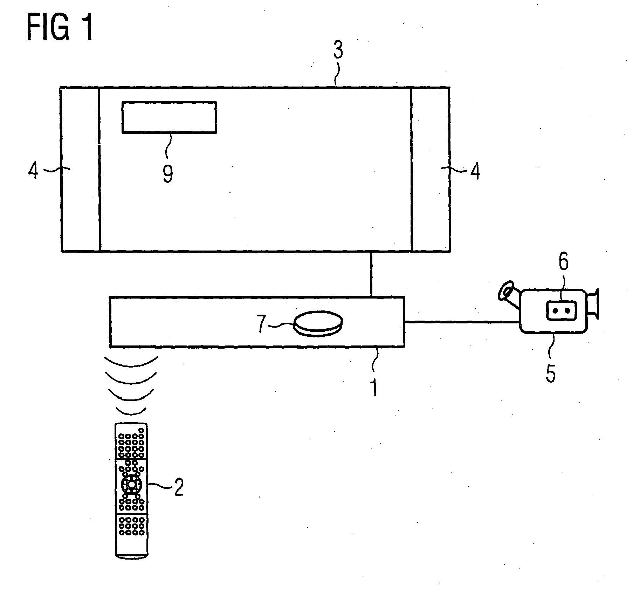

Figur 1 zeigt eine Anordnung mit einem ersten elektronischen Gerät 1, welches über eine Fernbedienung 2 gesteuert werden kann.

Das erste elektronische Gerät 1 kann z.B. ein Rekorder in Form eines DVD, Video oder Harddiskrecorders sein und ist an einem Anzeigegerät 3 angeschlossen. Das Anzeigegerät 3 ist in Form eines Röhrenbildschirms oder eines Flachbildschirms z.B. in LCD-, TFT- oder Plasma-Technik ausgebildet. In der Regel sind seitlich an dem Anzeigegerät oder unterhalb Lautsprecher 4 angeordnet. Mit dem ersten elektronischen Gerät 1 ist ein zweites elektronisches Gerät 5 verbunden. Im dargestellten Ausführungsbeispiel ist das zweite elektronische Gerät 5 eine digitale Videokamera mit einem eingebauten Datenspeicher 6, z.B. in Form eines Flashspeichers, eines Arbeitsspeichers oder einer digitalen Kassette, wobei die Daten auf dem Datenspeicher 6 auf einen Datenspeicher 7 im ersten elektronischen Gerät überspielt werden können und dann diese Daten im Anzeigegerät 3 betrachtet werden können. Der Datenspeicher 7 im ersten elektronischen Gerät kann z.B. als Videokassette, als DVD oder in Form einer Festplatte ausgebildet sein. Mit einer Fernbedienung 2 können zum einen die Funktionen des ersten elektronischen Gerätes 1 und zum anderen auch bestimmte Funktionen des zweiten elektronischen Gerätes 5 gesteuert werden.

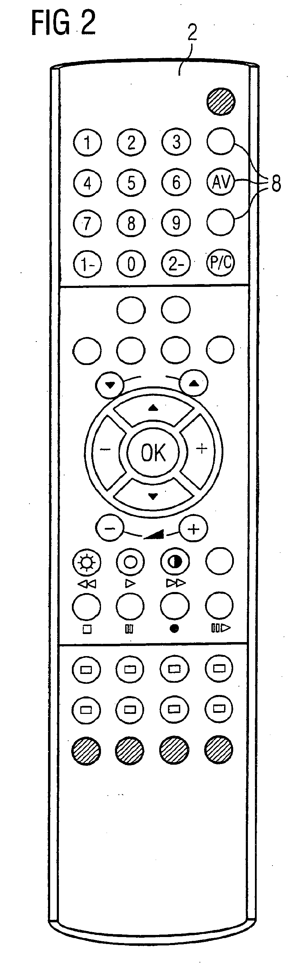

Wie in Figur 2 dargestellt, weist hierzu die Fernbedienung 2 eine Vielzahl von Tasten 8 auf, welche mit einer Beschriftung in Form von Zahlen oder Text oder mit Piktrogrammen versehen sind. Einige Tasten sind auch mit zwei Funktionen belegt, sodass das Piktogramm unterhalb der Taste dargestellt ist und diese Funktion nur über die vorherige Betätigung der "Shift"-Taste erreichbar ist.

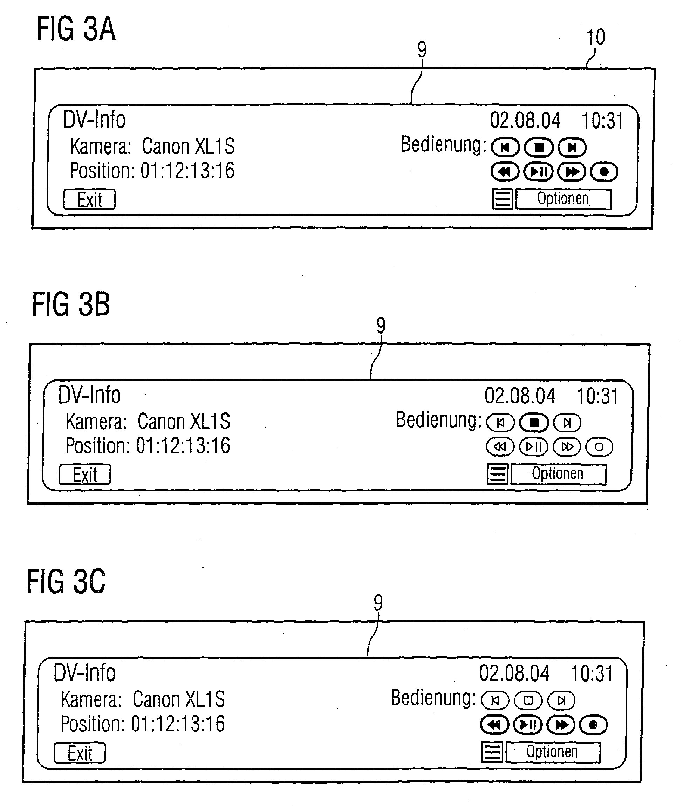

In den Figuren 3A bis 3C ist jeweils ein sogenanntes GUI (Graphical User Interface) dargestellt, welches bei Anschluss des zweiten elektronischen Gerätes 5 an das erste elektronische Gerät 1 am Anzeigegerät 3 dargestellt ist.

In dem GUI sind diejenigen Tastenfunktionen bzw. Tastensymbole 10 eingeblendet, welche ebenso auf der Fernbedienung 2 vorhanden sind und über welche die Funktionen des zweiten Gerätes 2 durch die Fernbedienung 2 gesteuert werden kann.

In der Darstellung gemäß der Figur 3A ist als zweites elektronisches Gerät 5 die Kamera Canon XL1S angeschlossen und im derzeitigen Zustand der Kamera sind alle Funktionen der eingeblendeten Tastensymbole 10 über die Fernbedienung 2 mit den entsprechenden Tasten bzw. Tastenkombinationen ausführbar.

In der Darstellung 3B befindet sich die Kamera in einem Zustand, in welchem nur die Tasten mit den Tastensymbolen des schwarzen Vierecks, welches für Stopp steht, verfügbar ist, während die Funktionen, welche sich hinter den anderen Tastensymbolen verbergen, im aktuellen Zustand nicht verfügbar sind. Wie in Figur 3B dargestellt, sind diejenigen Tastensymbole, welche im aktuellen Zustand nicht verfügbar sind, grafisch unterschiedlich, im vorliegenden Fall dunkler, darge stellt, sodass ein Benutzer sofort erkennen kann, welche Taste der Fernbedienung er im aktuellen Zustand des zweiten elektronischen Gerätes benutzen kann und welche Taste er nicht benutzen kann.

In der Figur 3C sind die Tastensymbole der oberen Reihe für Frame zurück, Stopp und Frame vor dunkel dargestellt, während die Tastensymbole der unteren Reihe für Rücklauf oder Play/Pause, Vorlauf und Aufnahme hell dargestellt sind. Frame zurück/vor bedeutet, es wird das vorherige/nächste Einzelbild dargestellt. Das Gerät befindet sich also in einem Zustand, in dem man nur die Tasten schneller Rücklauf, schneller Vorlauf, Aufnahme und Play bedienen kann. Durch die Visualisierung, welche Funktionen des zweiten elektronischen Gerätes 5, in diesem Fall die Kamera, über eine Fernbedienung, welche in der Regel für das erste elektronische Gerät vorgesehen ist, bedient werden können, ist es nahezu für jeden Benutzer somit problemlos möglich, angeschlossene externe zweite elektronische Geräte über die gleiche Fernbedienung zu steuern. Die Information, welche Tasten prinzipiell zur Steuerung des zweiten elektronischen Gerätes auf der Fernbedienung verwendet werden können und welche im aktuellen Zustand verwendet werden können, macht es einem Benutzer überhaupt bewusst, eine Fernbedienung zur Steuerung des zweiten elektronischen Gerätes zu verwenden und ermöglicht auch ohne großartiges Studium von Handbüchern die Bedienung durchzuführen.

Die Erfindung ist nicht auf das dargestellte Ausführungsbeispiel beschränkt, sondern bezieht sich auf sämtliche Ausführungsformen, welche unter dem Schutzbereich der Ansprüche fallen.

### Bezugszeichenliste

- 1: erstes elektronisches Gerät
- 2: Fernbedienung
- 3: Anzeigegerät
- 4: Lautsprecher
- 5: zweites elektronisches Gerät
- 6: Datenspeicher
- 7: Datenspeicher
- 8: Tasten
- 9: GUI
- 10: Symbole

## Patentansprüche

1. Anordnung mit einem ersten elektronischen Gerät (1), einer Fernbedienung (2) zur Bedienung von Funktionen des ersten elektronischen Gerätes (1), wobei die Funktionen auf der Fernbedienung mit Symbolen (10) **gekennzeichnet** sind, einem Anzeigegerät (3) und einem zweiten elektronischen Gerät (5), welche jeweils mit dem ersten elektronischen Gerät verbindbar sind, wobei mit der Fernbedienung (2) für das erste elektronische Gerät (1) auch Funktionen des zweiten elektronischen Gerätes (5) steuerbar sind, wenn das zweite elektronische Gerät (5) an dem ersten elektronischen Gerät (1) angeschlossen ist und auf dem Anzeigegerät (3) die Symbole (10) der Fernbedienung (2) eingeblendet sind, die für das zweite elektronische Gerät (5) verwendet werden können,
**dadurch gekennzeichnet, dass**
diejenigen Symbole (10) der Funktionen, die im aktuellen Zustand des zweiten elektronischen Gerätes (5) verfügbar sind, von den Symbolen (10) der Funktionen, die im aktuellen Zustand des zweiten elektronischen Gerätes nicht verfügbar sind, grafisch unterschiedlich dargestellt sind.

2. Anordnung nach Anspruch 1,
**dadurch gekennzeichnet, dass**
die Symbole (10), die für Funktionen des zweiten elektronischen Gerätes im aktuellen Zustand verfügbar sind, hell dargestellt sind und diejenigen, die im Zustand des zweiten elektronischen Gerätes nicht verfügbar sind, dunkel bzw. schattiert dargestellt sind.

3. Anordnung nach einem der Ansprüche 1 oder 2,
**dadurch gekennzeichnet, dass**
das erste elektronische Gerät als Rekorder mit einem Datenspeichermedium (7) ausgebildet ist, z.B. in Form eines Festplattenrekorders.

4. Anordnung nach einem der Ansprüche 1 bis 3,
**dadurch gekennzeichnet, dass**
das zweite elektronische Gerät (5) eine Kamera ist.

5. Anordnung nach einem der Ansprüche 1 bis 4,
**dadurch gekennzeichnet, dass**
das Anzeigegerät ein Bildgerät, z.B. in Form eines LCD-, TFT- oder Plasma-Bildschirmes ist.

6. Anordnung nach einem der Ansprüche 1 bis 5,
**dadurch gekennzeichnet, dass**
auf dem Anzeigegerät (3) die Anzeige der Symbole (10) für das zweite elektronische Gerät im Graphical User Interface (9) erfolgt.

7. Anordnung nach einem der Ansprüche 1 bis 6,
**dadurch gekennzeichnet, dass**
die Fernbedienung (2) Tasten (8) aufweist und die Tasten (8) mit den Symbolen (10) in Form von Buchstaben, Zahlen, Piktogrammen und Farben **gekennzeichnet** sind.
